# EUROPEAN PATENT APPLICATION

(11) **EP 2 835 566 A1**
(43) Date of publication of application: **11.02.2015**
(21) Application number: 13773078.4
(22) Date of filing: 15.01.2013
(51) Int. Cl.: F16L 9/147

(54) **COMPOSITE PIPE HAVING IMPROVED INTER-HETEROGENEOUS MATERIAL BONDING FORCE, DEVICE FOR MANUFACTURING SAME, AND METHOD FOR MANUFACTURING SAME**

(30) Priority: 04.04.2012 KR 20120034988
(71) Applicant: Lordoi.co.kr, Anyang-si, Gyeonggi-do 431-807 (KR)
(72) Inventor: AHN, Kyung-Wook, Anyang-si Gyeonggi-do 431-070 (KR)
(74) Representative: Izquierdo Faces, José
(86) International application number: PCT/KR2013/000293
(87) International publication number: WO 2013/151229

(57) **Abstract**

The present disclosure relates to a composite pipe having improved bonding strength between heterogeneous materials, which provides continuous bonding strength by chemical bond between heterogeneous materials, thereby preventing separation between the heterogeneous materials even at a high temperature and a high pressure, so as to replace a metal-based pipe used in fields of industry demanding heat resistance and chemical resistance, and an apparatus and a method of manufacturing the composite pipe.

Accordingly, strong bonding strength according to chemical bond in the unit of nano between the heterogeneous materials is achieved, so that separation between the heterogeneous materials is not generated even at a high temperature and a high pressure, thereby being capable of further expanding the applicable fields of industry.

## Description

### Technical Field

The present invention relates to a composite pipe, and an apparatus and a method of manufacturing the composite pipe. More particularly, the present invention relates to a composite pipe having improved bonding strength between heterogeneous materials, which provides continuous bonding strength by chemical bond between heterogeneous materials, thereby preventing separation between the heterogeneous materials even at a high temperature and a high pressure, so as to replace a metal-based pipe used in fields of industry demanding heat resistance and chemical resistance, and an apparatus and a method of manufacturing the composite pipe.

### Background Art

Tubes or pipes have been internationally manufactured of various materials, such as metal or polymer, according to use and a function in fields of industry including a construction field, a maritime field, and a military field.

The tube or the pipe formed of a polymer material has low heat resistance and pressure resistance, so that the tube or the pipe is limitedly used in a refrigerant fluid having a temperature lower than 80°C or within a range of an actual pressure lower than 10 kgf/cm2. Further, the use of the tube or the pipe is restricted in an environment in which a crack is generated due to impact or an environment in which tensile strength and yield strength resistant to stratum pressure or other pressures are generated.

In the meantime, the tube or the pipe has an advantage of excellent impact strength and shearing stress, and strong strength at a high temperature and a high pressure, but has a disadvantage of fragility against a crack according to vibration and the chemical corrosion by an organic solvent, such as acid or alkali. Accordingly, in order to compensate for the disadvantage, a metal alloy or a high-priced nonferrous metal-based material having excellent chemical resistance is used. However, such a material has a high production cost so that its economic feasibility is deteriorated, thereby having a limitation in application to broad fields of industry.

Accordingly, research on a composite pipe in the form in which a polymer layer is bonded to a metal layer by using a plastic material which has not been used in the field demanding a high temperature and a high pressure has been conducted.

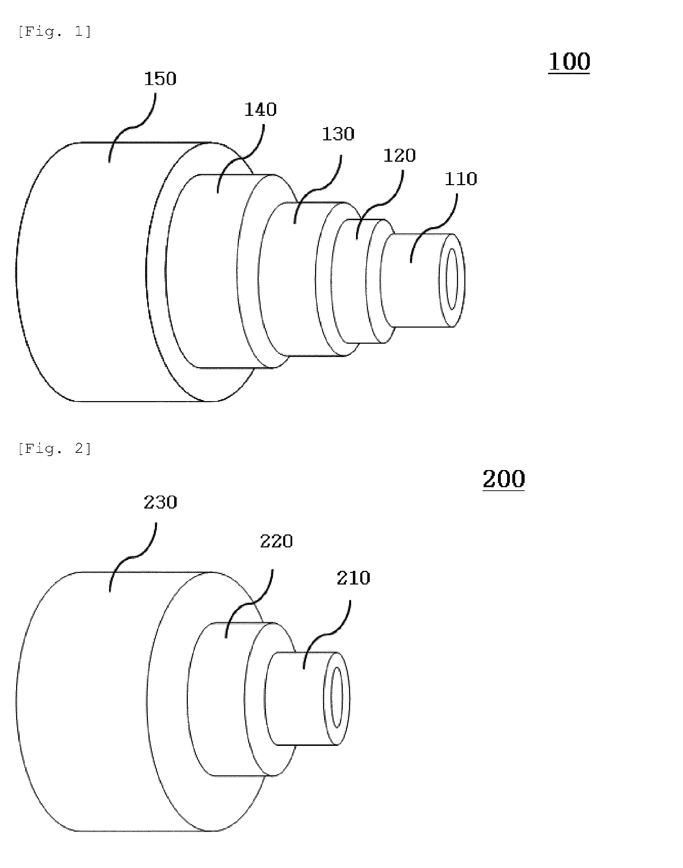

FIG. 1 is a diagram illustrating a structure of a conventional composite pipe.

As illustrated in FIG. 1, a conventional composite pipe 100, which complies with the 1335 international standard of the American Society for Testing Materials(ASTM), includes a first polymer layer 110, a first bond layer 120, a metal layer 130, a second bond layer 140, and a second polymer layer 150 from an inner side.

The structure of the composite pipe may have an inherent material's property value through improvement of bonding strength between heterogeneous materials, in addition to a characteristic of a selected material, and further the material's property can be maintained only when the bonding strength is continued.

However, the conventional composite pipe does not have high bonding strength due to the dependence only on a simple coating, viscosity, or electrostatic bond, such as van der Waals forces, and a physical bond method and is difficult to continuously maintain the bonding strength, so that it is substantially difficult to replace the existing pipe formed of a metal or polymer material with the conventional composite pipe.

Apparatuses for manufacturing the conventional composite pipe have been conceived so as to use an adhesive resin having low viscosity and high liquidity even at a low temperature, so that it is difficult to perform a chemical reaction, i.e. an ion activation reaction, an ion substitution reaction, or a hydrogen decomposition reaction, available in an environment at a high temperature and a high pressure.

That is, the apparatus for manufacturing the conventional composite pipe progresses the processes of extruding, coating an adhesive, melt-bond, cooling and hardening, and fixing, and most of the processes are progressed at a low temperature and a low pressure.

As such, the process temperature at which the polymer layer is bonded to the metal layer by using the adhesive resin is low, so that the adhesive layer itself is not formed by the bond between the heterogeneous materials, but is formed by only the viscosity of the adhesive and the electrostatic bond between the polymer layer and the metal layer.

Accordingly, the conventional composite pipe has very weak adhesive strength or bonding strength of the adhesive layers 120 and 140 between the polymer layers 110 and 150 and the metal layer 130, so that it is difficult to maintain durability even in a small environmental change and interlayer separation is easily generated due to different contraction rates and different expansion rates between the heterogeneous materials.

### Disclosure of the invention

### Technical Object

Accordingly, the present invention has been made to solve the above-mentioned problems occurring in the prior art, and the present invention provides a composite pipe having improved bonding strength between heterogeneous materials, which solves a problem of weak bonding strength between composite materials in a composite pipe in which heterogeneous materials are combined through strong bonding strength by chemical bond based on a nano unit, thereby being capable of continuously maintaining the bonding strength against a change in an outside environment while directly reflecting a characteristic of the complex material, and an apparatus and a method of manufacturing the composite pipe.

### Technical Solution

In accordance with an aspect of the present invention, there is provided a composite pipe with improved bonding strength between heterogeneous materials, the composite pipe being formed of the heterogeneous materials including a polymer resin and a metal, the composite pipe including: a first polymer layer formed in an innermost side of the composite pipe; a metal layer formed on an external surface of the first polymer layer; and a second polymer layer formed on an external surface of the metal layer, wherein a connection between the first polymer layer and the metal layer and a connection between the metal layer and the second polymer layer are formed by ion substitution bond.

In accordance with another aspect of the present invention, there is provided a composite pipe with improved bonding strength between heterogeneous materials, the composite pipe being formed of the heterogeneous materials including a polymer resin and a metal, the composite pipe including: a metal layer formed in an innermost side of the composite pipe; and a polymer layer formed on an external surface of the metal layer, wherein a connection between the metal layer and the polymer layer is formed by ion substitution bond.

In accordance with another aspect of the present invention, there is provided an apparatus for manufacturing a composite pipe with improved bonding strength between heterogeneous materials, the apparatus including: first polymer resin extruder for extruding a first polymer resin so as to form a first polymer layer; a first reaction derivative extruder for extruding a reaction derivative on a surface of the first polymer layer; a first substitution bond reactor for inducing substitution bond between a surface of a metal and the first polymer layer containing an unsaturated group to bond the reaction derivative to an outside of the first polymer layer; a metal-plate layer supply device for forming a metal layer by supplying a metal-plate layer to the outside of the first polymer layer to which the reaction derivative is bonded; a metal layer forming device for forming a metal layer in the outside of the first polymer layer; a high frequency heater for heating the metal layer by using a high frequency; a second reaction derivative extruder for extruding the reaction derivative on a surface of the metal layer; a second polymer resin extruder for extruding a second polymer resin so as to form a second polymer layer; and a second substitution bond reactor in which the substitution bond is formed between the surface of the metal layer and the second polymer layer by the reaction derivative extruded on the surface of the metal layer.

In accordance with another aspect of the present invention, there is provided a method of manufacturing a composite pipe with improved bonding strength between heterogeneous materials, the method including: forming a first polymer layer by extruding a first polymer resin through a first polymer resin extruder; extruding a first reaction derivative for extruding a reaction derivative on a surface of the first polymer layer; forming a metal layer by supplying a metal-plate layer to the surface of the first polymer layer on which the reaction derivative is extruded; extruding a second reaction derivative for extruding the reaction derivative on a surface of the metal layer; and forming a second polymer layer by extruding a second polymer resin on an outside surface of the metal layer on which the reaction derivative is extruded through a second polymer resin extruder.

### Advantageous Effects

According to the composite pipe having the improved bonding strength between the heterogeneous materials and the method of manufacturing the composite pipe according to the present invention, the strong bonding strength may be achieved by the substitution bonded based on the nano unit between the heterogeneous materials, so that the separation phenomenon between the heterogeneous materials is not generated even at a high temperature and high pressure and thus fields of industry to which the present invention may be applied may be further expanded.

### BRIEF DESCRIPTION OF THE DRAWINGS

The patent or application file contains at least one drawings executed in color. Copies of this patent or patent application publication with color drawing(s) will be provided by the Office upon request and payment of the necessary fee.
FIG. 1 is a diagram illustrating a structure of a composite pipe according to a conventional art.
FIG. 2 is a diagram illustrating a structure of a composite pipe according to an exemplary embodiment of the present invention.
FIG. 3 is a diagram illustrating a structure of a composite pipe according to another exemplary embodiment of 10 the present invention.
FIG. 4 is a diagram illustrating an apparatus for manufacturing a composite pipe according to the present invention.
FIG. 5 is a diagram illustrating a connection structure of a reaction derivative extruder of an apparatus for manufacturing a composite pipe according to the present invention.
FIG. 6 is a cross-sectional view illustrating a substitution bond reactor of an apparatus for manufacturing a composite pipe according to the present invention.
FIG. 7 is a flowchart illustrating a method of manufacturing a composite pipe according to the present invention.
FIG. 8 is a diagram illustrating a mechanism of radical polymerization and metal ion copolymerization.
FIG. 9 is a diagram illustrating a mechanism of hydrogen decomposition reaction and ion substitution reaction in a metal surface.
FIG. 10 is a Transmission Electron Microscopy (TEM) picture of a surface after a metal surface is substitution bonded to an organic ion.
FIG. 11 is a Scanning Electron Microscopy (SEM) picture of a surface after a metal surface is substitution bonded to an organic ion.

### DETAILED DESCRIPTION OF THE EXEMPLARY EMBODIMENTS

Hereinafter, an exemplary embodiment of the present invention will be described with reference to the accompanying drawings in more detail.

FIG. 2 is a diagram illustrating a structure of a composite pipe according to an exemplary embodiment of the present invention.

Referring to FIG. 2, the composite pipe according to the exemplary embodiment of the present invention includes a first polymer layer 210, a metal layer 220, and a second polymer layer 230.

In this case, a connection between the first polymer layer 210 and the metal layer 220 is formed by ion substitution bond between outermost electrons of a molecule or an atom in the unit of nano. Further, a connection between the metal layer 220 and the second polymer layer 230 is also formed by ion substitution bond between outermost electrons of a molecule or an atom in the unit of nano.

That is, interlayer bonding strengths between the first polymer layer 210 and the metal layer 220 and between the metal layer 220 and the second polymer layer 230 is not formed by an adhesive or an adhesive resin, but by the direct ion substitution bond that is a process of chemical bond between heterogeneous materials to be bonded to each other.

A hydrogen group in a carbon based polymer chain is separated by a hydrogen decomposition reaction in a metal surface under a condition of a high temperature and a high pressure. Further, the outermost electron of a metal surface of a metal to be bonded in an unsaturated melting state is activated under a condition of a high temperature and a high pressure.

Then, the hydrogen separated from the polymer chain is removed in a gaseous state and then is rapidly cooled. In this case, the hydrogen is removed from an ion group in the unstable metal surface, so that the ion group is bonded to a carbon group in an unsaturated state.

In this case, when a radical substitution rate that is a bonding strength per mole in the unit of nano between the polymer layer and the metal layer is stronger than an expansion and contraction strength (stress delta E) between molecules by an inherent contraction rate of each of the heterogeneous materials, the heterogeneous materials are not separated even in an environment of a large temperature difference (-150°C to 200°C) and a high pressure (100 kgf/cm²) and show an excellent property of a composite material.

In a case of the first polymer layer 210, when a fluid having a very high operational temperature within the pipe as 100°C or higher and high chemical reactivity is used, the first polymer layer 210 needs to be capable of being bonded to the metal while satisfying the heat resistance and the chemical resistance. Further, after the bond to the metal, the first polymer layer 210 needs to have good flexibility so as to be bent, and to maintain a stable state for a long time in a bent state.

In order to satisfy the condition, in the composite pipe according to the present invention, it is preferable to use a fluorine resin having no problem at a high temperature and excellent chemical resistance for the first polymer layer 210.

A representative example of the fluorine resin is polytetrafluoroethylene (PTFE). The PTFE has excellent heat resistance and extremely low friction coefficient, so that it is possible to improve a rate of the fluid and has excellent chemical resistance.

In the meantime, the fluorine resin (teflon resin and PTFE: asynthetic fluoropolymer of tetrafluoroethylene) or a polyamide (nylon)-based resin, such as polyamide 6, polyamide 66, and polyamide 12, may also be used for the first polymer layer 210.

Further, since the polyamide has a property of generating a microscopic melting in a differential section in a molecular unit (the unit of a submicron or smaller) in a metal surface (a mold contact part), the polyamide flows to the outside of an interface of the polyamide (the metal surface/the mold contact part) when the polyamide is used after being copolymerized with the fluorine-based resin (Teflon-based resin), thereby rapidly increasing corrosion resistance and chemical resistance.

Accordingly, the polyamide-based resin or synthetic fluoropolymer is used or two types (series) of copolymers (grafting copolymer: grafting co-polymerization between polyamide and synthetic fluoropolymer) are used.

The nylon (polyamide)-based resin has lower chemical resistance than that of the fluorine resin, but may be used in a petrochemical-based solvent or other oil. Further, nylon (polyamide)-based resin has a low processing temperature, high productivity, excellent formability, and high economic feasibility compared to that of the fluorine resin. Further, the nylon (polyamide)-based resin has excellent flexibility after being bonded to the metal layer 220 and may maintain the flexibility for a long time.

Further, the first polymer layer 210 may use a grafting copolymer of at least one of polyamide resin 6 or polyamide 66 and polyamide 12, and the PTFE.

That is, the polyamide (nylon)-based resin, the copolymer of the fluorine resin and the polyamide (nylon)-based resin, or a copolymer of a modified fluorine resin (synthetic fluropolymer of tetrafluoroethylene) is used for the first polymer layer 210, so that it is possible to improve heat resistance and chemical resistance compared to a cross-linked resin.

In the meantime, a Poly Phenylene Sulfide (PPS) resin or a Poly Butylene Terephthalate (PBT) resin may be used for the first polymer layer 210, instead of the fluorine resin or the nylon (polyamide)-based resin.

The PPS resin has slightly low processability (production rate), but has excellent chemical resistance comparable to that of the fluorine resin and is economical.

In the meantime, the PBT resin has lower chemical resistance than that of the fluorine resin, but is more excellently economical than the PPS resin, the nylon-based resin, and the fluorine resin.

A Medium Density Polyethylene (MDPE) may be used for the first polymer layer 210.

The cross-linked resin and a High Density Polyethylene (HDPE) resin having high thermostability receives attack by a chlorine group (Cl⁻) contained in tap water when being used in a water pipe, etc., thereby causing a problem in that a polymer chain is cut. However, the MDPE is not affected by the chlorine group (Cl⁻) at all.

Accordingly, when the relatively cheap MDPE is used for the first polymer layer 210 in substituting a general use tube of a water pipe, etc., costs may be reduced.

In the meantime, when the first polymer layer 210 does not significantly demand chemical resistance or heat resistance, but needs only high pressure resistance and a flexible property, like an air tube, the HDPE or a cross-linked olefin-based resin (PEX) of which a resin price is very cheap may be used for the first polymer layer 210.

Further, the aforementioned resin may be applied to a field, such as an aircraft cable protecting tube or an aluminum/magnesium tube for ship, demanding a low specific gravity and a light weight.

Iron (Fe), aluminum (Al), copper (Cu), titanium (Ti), magnesium (Mg), or an alloy thereof may be used for the metal layer 220, and a heat-proof, flame-proof, or ultraviolet ray-proof polymer resin may be used for the second polymer layer 230 depending on a use purpose.

When the second polymer layer 230 is expansively applied to the construction, the second polymer layer 230 needs to meet a flame retardancy level of which the regulations are recently strictly expanded, and it is difficult to use an existing bromine (Br)-based or phosphorous (P)-based flame retardant according to an economical regulation.

Accordingly, it is preferable to use a grafting compound of a magnesium hydroxide (MgOH₂) or an aluminum hydroxide (AlOH₃) and polyethylene for the second polymer layer 230.

More specifically, in the application to fields of industry demanding no flame retardant condition, a material satisfying a condition of high pressure (a material such as a pressure-resistant HDPE or pressure-resistant polyamide satisfying P class -80 or 100, high-pressure/hard acrylonitrile, butadiene and styrene (ABS), and pressure-resistant/heat-resistant polybutylene) and a gas barrier property (a polyolefin-based material satisfying a gas barrier condition) among the general polyolefin, amide, and styrene co-polymer based materials may be used.

However, since the fields of industry to which the aforementioned resin is applied demand at least level V2 of the UL-93 standard, it is necessary to modify the material applied for the non-frame retardant, pressure resistance, and sealing into a flame retardant material (flame retardant polymer).

In terms of the modification, the aforementioned material is modified into the flame retardant material having a non-halogen structure and applied considering the environment problem, in which metal powder, such as a magnesium hydroxide and an aluminum hydroxide, or a metal salt-based material is low temperature polymerized in the form of fine powder of 1,000 mesh or higher (dehydroxylation: low temperature condensation reaction) and is grafting copolymerized. In this case, the flame retardant degree may be controlled by gradationally increasing a quantity of aforementioned powder.

The hardness issue generated in the control of the flame retardant degree may be solved by using an antimony (SbO2)-based material as an adjuvant (in a case where the flexibility is important in the tube) or by using an oxide of magnesium (MgO), etc., as first and second adjuvant.

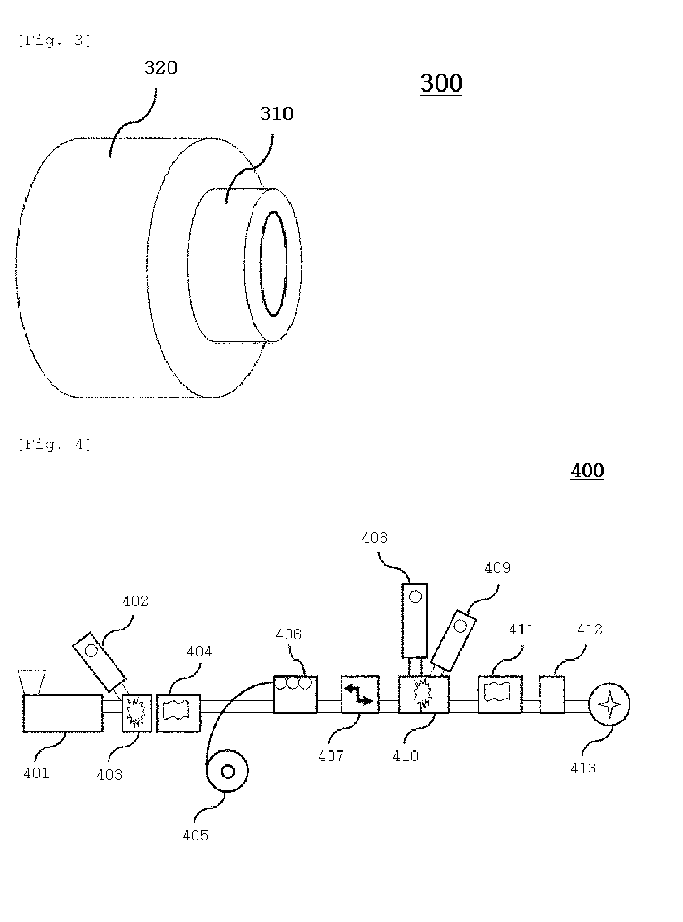

FIG. 3 is a diagram illustrating a structure of a composite pipe according to another exemplary embodiment of the present invention.

Referring to FIG. 3, the composite pipe according to another exemplary embodiment of the present invention includes a metal layer 310 and a polymer layer 320.

There is a case in which a metal pipe has to be used because a fluid demanding heat resistance and chemical resistance is inevitably used. In this case, the composite pipe having a single structure formed through the bond of the metal layer 310 and the polymer layer 320 may be used.

Even in a case of the composite pipe having the single structure, the interlayer bond between the metal layer 310 and the polymer layer 320 is not formed by an adhesive or an adhesive resin, but by the direct ion substitution bond that is the chemical bond process between heterogeneous materials to be bonded to each other.

In the composite pipe having the single structure, the respective layers are not separated according to high bonding strength between the metal layer 310 and the polymer layer 320 and a thickness of the metal layer 310 is decreased to have 1/2 to 1/10 of that of a conventionally used metal pipe, thereby reducing the costs.

Likewise to the composite pipe having a double structure, iron (Fe), aluminum (Al), copper (Cu), titanium (Ti), magnesium (Mg), or an alloy thereof may be used for the metal layer 310 of the composite pipe having the single structure, and a heat-proof, flame-proof, or ultraviolet ray-proof polymer resin may be used for the polymer layer 320 depending on a use purpose.

As described above, in the composite pipe having the double structure according to the present invention, the first polymer layer is formed by using the material having excellent heat resistance and chemical resistance and the ion substitution bond is formed between the first polymer layer and the metal layer, so that the application fields may become various up to a field demanding vibration damping, shearing stress, impact resistance, high tensile strength, as well as a high temperature, a high pressure, and chemical resistance.

FIG. 4 is a diagram illustrating an apparatus for manufacturing a composite pipe according to the present invention.

As illustrated in FIG. 4, an apparatus 400 for manufacturing the composite pipe according to the present invention includes a first polymer resin extruder 401, a first reaction derivative extruder 402, a first substitution bond reactor 403, a first cooling device 404, a metal-plate layer supply device 405, a metal layer forming device 406, a high frequency heater 407, a second reaction derivative extruder 408, a second polymer resin extruder 409, a second substitution bond reactor 410, a second cooling device 411, a cutting device 412, and a winder 413.

The first polymer resin extruder 401 forms the first polymer layer 210 by extruding a first polymer resin. The first polymer resin extruder 401 is operated at a high temperature of 500°C or higher so as to form the first polymer layer 210.

Next, the first reaction derivative extruder 402 extrudes a reaction derivative with the first substitution bond reactor 403 and prepares the ion substitution bond reaction to an external surface of the first polymer layer 210.

The conventionally used adhesive resin or coating agent is decomposed and hardened so the function thereof is lost in a high temperature and high pressure environment.

Accordingly, in the present invention, a strong acid-based polar medium having high reactivity was confined in a reaction retardant, followed by particle dispersion in a rubber-based resin that is not decomposed at a high temperature, to prepare the reaction derivative. The reaction derivative is reacted in the first substitution bond reactor 403 and the second substitution bond reactor 410 in which a high temperature and high pressure environment is formed during the production process, to induce the activation and the substitution bond reaction between the polymer layer and the metal layer.

The first substitution bond reactor 403 provides an environment for inducing strong bond between the metal surface and the polymer layer containing an unsaturated group.

That is, the first substitution bond reactor 403 makes an environment having a temperature of 250°C or higher and a pressure in range of 5 to 30 kg/cm², and a surface itself of the first substitution bond reactor 403 functions as a metal body for exchanging electrons for activation of electrons having polarity.

Since the production process rapidly progresses, even though a time during which the reaction derivative remains is short, the reaction very rapidly progresses by a high temperature of 250°C or higher and the formation of a pressure in range of 5 to 30 kg/cm₂ according to a narrow discharge port.

Accordingly, the substitution bond reaction is generated at a rapid speed in the surfaces of the metal layer 220 and the first polymer layer 210.

In the conventional art, the adhesive is coated on the surface of the first polymer layer in a process in which the first polymer resin and the adhesive are simply extruded and passed, and the configuration, such as the first substitution bond reactor according to the present invention, was not included and no pressure was formed in the coating process of the adhesive.

However, the fluorine resin, etc., which has excellent heat resistance and chemical resistance so that the reaction is not well generated, is used for the first polymer layer in the present invention, so that the ion substitution bond cannot be generated between the first polymer layer and the metal layer in a low temperature and low pressure environment.

Accordingly, the present invention includes the first substitution bond reactor 403 for providing the high temperature and high pressure environment is included in order to induce the ion substitution bond between the first polymer layer 210 and the metal layer 220. That is, a structure of the first substitution bond reactor 403 is formed in the form of a fine runner tube to increase a pressure, and a temperature of the reactor is maintained at a high temperature of 250°C or higher, so that the present invention provides the environment in which the ion substitution bond may be generated between the first polymer layer 210 and the metal layer 220.

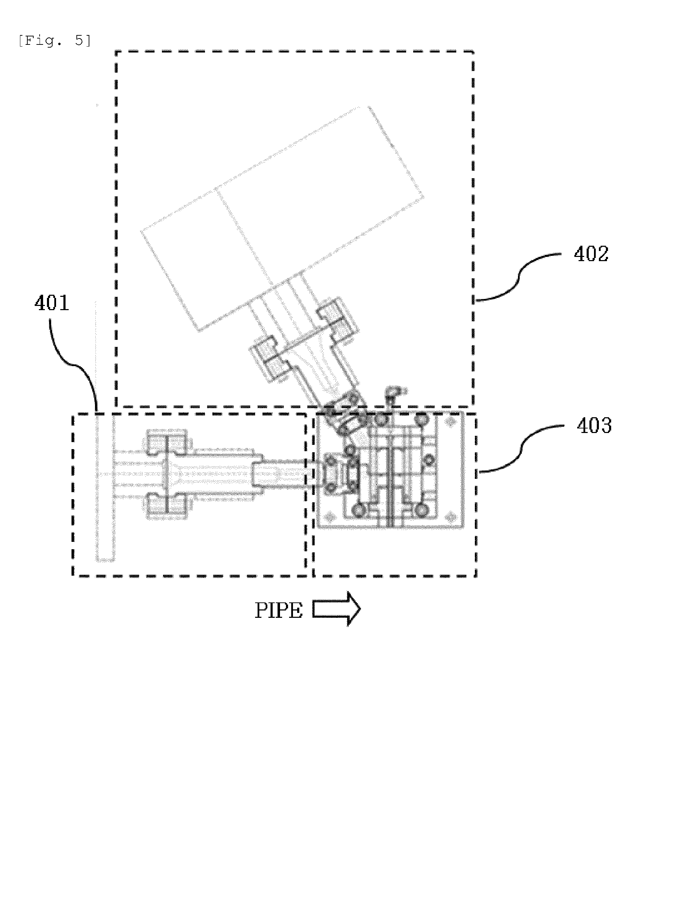

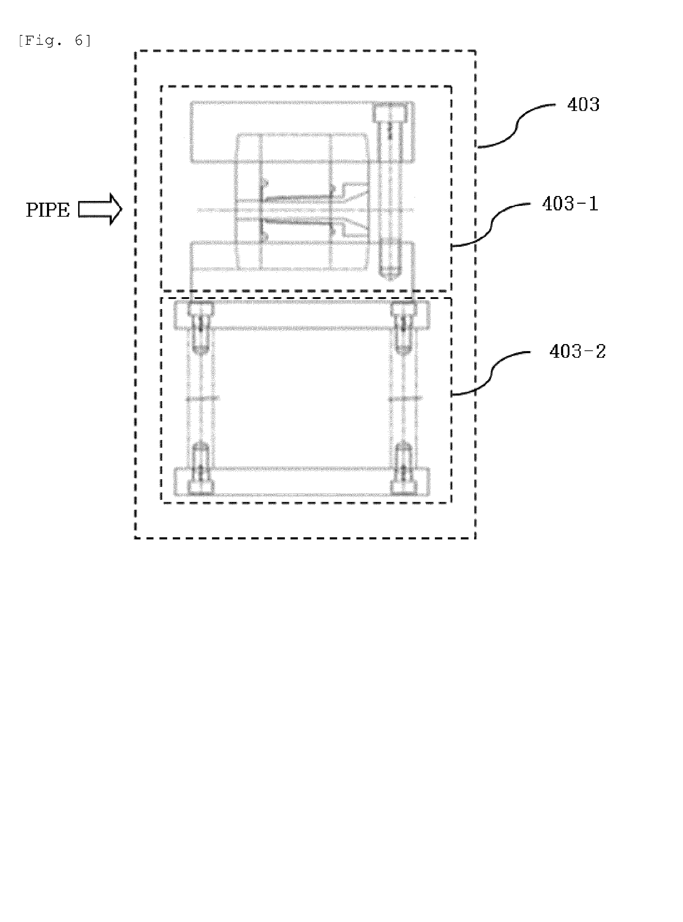

FIG. 5 is a diagram illustrating a connection structure of the reaction derivative extruder of the apparatus for manufacturing the composite pipe according to the present invention, and FIG. 6 is a cross-sectional view illustrating the substitution bond reactor of the apparatus for manufacturing the composite pipe according to the present invention.

As illustrated in FIG. 5, the first reaction derivative extruder 402 is not arranged with the first polymer resin extruder 401 in a row, but is connected to the first substitution bond reactor 403 while maintaining an angle of 40° to 60° with respect to a direction of production progress of the pipe. That is, the first reaction derivative extruder 402 is disposed in an angle as small as possible with respect to a direction of production progress of the pipe so as to prevent load in a flow of a fluid due to a high temperature heating and a high pressure.

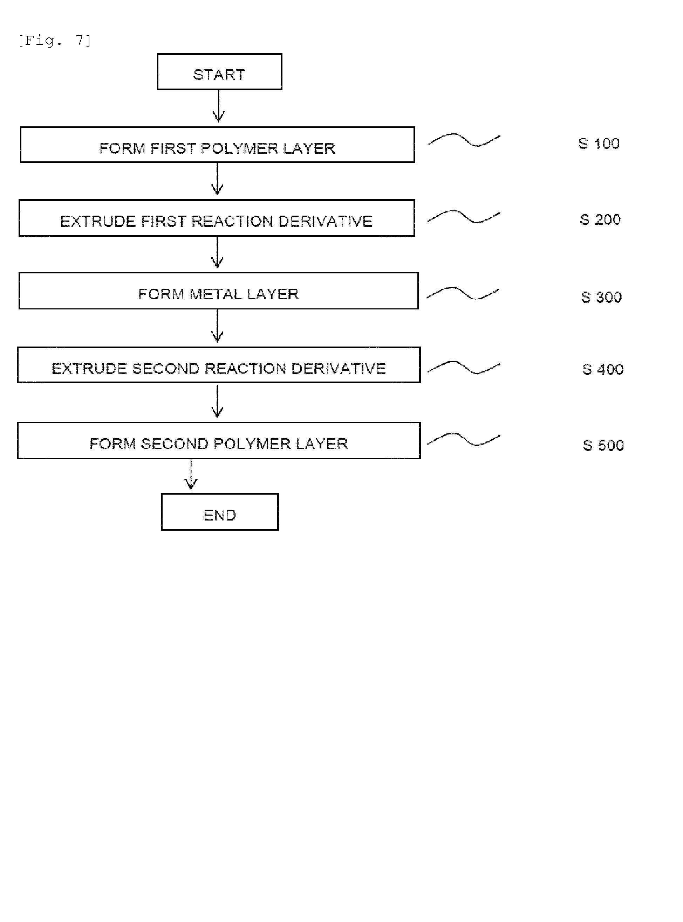

Further, in order to reduce the manufacturing expenses of the first substitution bond reactor 403, as illustrated in FIG. 7, the first substitution bond reactor 403 is designed in a manner that it is separated into a reaction part 403-1 in which the first substitution bond actually progresses and a body part 403-2 for supporting the reaction part, so that the reaction part 403-1 and the body part 403-2 may be individually changed.

Further, the first substitution bond reactor 403 is designed to have an assembling structure in which a height of the first substitution bond reactor 403 is easily controlled and left and right parts of the first substitution bond reactor 403 are easily disassembled in order to replace the first substitution bond reactor 403 without moving the first polymer resin extruder 401 and the first reaction derivative extruder 402 attached to the first substitution bond reactor 403.

After the progress of the substitution bond reaction to the outside of the first polymer layer 210, a cooling process is partially performed on the first polymer layer 210 through the first cooling device 404 before supply of a metal-plate layer through the metal-plate layer supply device 405. The reason is that the temperature of the first substitution bond reactor 403 is a high temperature of 250 °C or higher and the flexibility of the pipe passing the first substitution bond reactor 403 is excessively large, and thus a subsequent process is not easy.

Then, the metal-plate layer is supplied to the outside of the first polymer layer 210 through the metal-plate layer supply device 405 to form the metal layer 220 through the metal layer forming device 406.

The high frequency heater 407 momentarily generates a high temperature of 800°C by using high frequency such that the reaction is effectively generated within the second substitution bond reactor 410 when the substitution bond is formed between the metal layer 220 and the second polymer layer 230. Accordingly, the metal layer 200 may be preheated within a range of 200°C to 700°C, and the surface of the metal layer 220 is preheated to have a temperature in range of 500°C to 700°C.

In the meantime, the pipe is simply formed of metal or plastic through a sizing in the existing process, so that it is difficult to continuously produce the pipe and it takes much time to replace the metal-plate layer made of a metal material.

However, according to the present invention, it is possible to automatically exchange the metal-plate layer even during the process of the production of the pipe through the metal layer forming device 406, so that it is expected that the productivity is increased and the error rate is decreased.

In the meantime, likewise to the first reaction derivative extruder 402, the second reaction derivative extruder 408 is not arranged with the second polymer resin extruder 409 in a row, but is connected to the second substitution bond reactor 410 while maintaining an angle of 40° to 60° with respect to the direction of the production progress of the pipe. That is, the second reaction derivative extruder 408 is disposed in an angle as small as possible with respect to the direction of the production progress of the pipe so as to prevent load in a flow of a fluid due to a high temperature heating and a high pressure.

Likewise to the first substitution bond reactor 403, the second substitution bond reactor 410 provides an environment for inducing strong bond between the surface of the metal layer 220 and the second polymer layer 230 containing an unsaturated group. That is, the second substitution bond reactor 410 has a similar structure to that of the first substitution bond reactor 403 and provides an environment having a temperature of 250°C or higher and a pressure of 5 to 30 kg/cm².

FIG. 7 is a flowchart illustrating a method of manufacturing a composite pipe according to the present invention.

As illustrated in FIG. 7, the method of manufacturing the composite pipe according to the present invention includes forming a first polymer layer (S100), extruding a first reaction derivative (S200), forming a metal layer (S300), extruding a second reaction derivative (S400), and 15 forming a second polymer layer (S500).

In the forming of the first polymer layer (S100), the first polymer layer 210 is formed by extruding a first polymer resin through the first polymer resin extruder 401.

In the extruding of the first reaction derivative (S200), the ion substitution bond in the unit of nano between the first polymer layer 210 and the metal layer 220 is formed by extruding a pre-prepared reaction derivative in the surface of the first polymer layer 210.

In the forming of the metal layer (S300), the metal layer 220 is formed through the metal layer forming device 406 by supplying a metal-plate layer 220 in an annular shape to the surface of the first polymer layer 210 in which the reaction derivative is extruded and fixing the metal-plate layer. In the meantime, the metal layer 220 is 5 formed and the reactive derivative is simultaneously reacted to an inner surface of the metal layer, so that the ion substitution bond in the unit of nano is formed between the metal layer 220 and the first polymer layer 210.

In the extruding of the second reaction derivative (S400), the ion substitution bond in the unit of nano is formed between the metal layer 220 and the second polymer layer 230 by extruding the reaction derivative on the surface of the metal layer 220.

In the forming of the second polymer layer (S500), the second polymer layer 230 is formed by extruding a second polymer resin on the surface of the metal layer 220 on which the reaction derivative is coated through the second polymer resin extruder 409. In the meantime, the second polymer layer 230 is formed and the ion substitution bond in the unit of nano is simultaneously formed between the metal layer 220 and the second polymer layer 230 by the reaction of the reaction derivative to the external surface of the metal layer 220 and the polymer resin.

The composite pipe manufactured through the aforementioned processes is wound by the winder 413 after passing the second cooling device 411 and the cutting device 412.

In the meantime, the aforementioned reaction derivative has to induce the substitution reaction between the polymer layer and the metal layer without a loss of activity in the high temperature and high pressure environment. Accordingly, a process of preparing the reaction derivative is one of the core characteristics of the present invention, and will be described in detail below.

First, a seed that is an activated radical having strong reactivity is absorbed to a rubber-based resin which is not decomposed at a high temperature and has a high molecular weight. Then, an outside of the seed is coated with a nonreactive liquid, such as silicon oil, such that the reactivity is maintained as it is before the process of forming the substitution bond between the polymer layer and the metal layer. Further, in order to protect the coated seed, the seed is confined by particle dispersion processing in a resin having the same material as that of the polymer resin to be bonded and master batching.

In order to increase a reaction rate of the reaction derivative, modification for matching polar groups is needed to minimize the van der Waals repulsive forces between a metal ion (M+) and a carbon ion (C-) of a main chain of the polymer resin at a high temperature and a high pressure.

The reason is that most of the materials constituting the inside of the pipe are non-polarity polymers, such as polyethylene or polypropylene.

That is, in order to form the nano substitution between the metal surface and the polymer ion within the first and second substitution reactors 403 and 410 and enhance the substitution bond force, the metal surface and the polymer resin are modified in advance.

Strong acid having very high reactivity needs to be used such that the reactive derivative exerts its performance. In order to confine the strong acid having the high reactivity, it is necessary to select an appropriate rubber and appropriately adjust a quantity of an input of the rubber. In this case, a rubber, which has a high molecular weight, is insensitive to chemical reaction, and has relatively little double bond or triple bond, is preferable.

When the reaction derivative is decomposed at a high temperature, the chain of the polymer resin is decomposed by the reaction derivative in the substitution reaction during the production process, so that gas is excessively generated until the reaction derivative remains as a general olefin including only a carbon chain. Accordingly, the bond reaction between the heterogeneous materials is disturbed.

Further, when the reaction derivative is excessively supplied, the reaction derivative directly turns into a gel during the rapid production process, so that failure, such as pin-hole, is generated.

A functional material introduced in the aforementioned modification process includes Meth-Acrylate (MA), Vinyl Acetate (VA), Maleic Anhydride (MA), Methylmethacrylate (MMA), and the like, mainly having a polar group.

Since it is necessary to use the rubber-based resin having a high molecular weight which is difficult to be deformed within the high-temperature and high-pressure reactor in the present invention, the graft copolymerization capable of simultaneously performing the radical polymerization and the metal ion polymerization for a comonomer having the olefin and a polar group, is used.

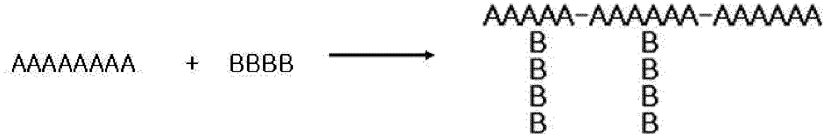

A graft polymer has a structure in which the introduced monomer (B) is grafted and bonded to a high molecular weight backbone (A) as represented in the above mechanism.

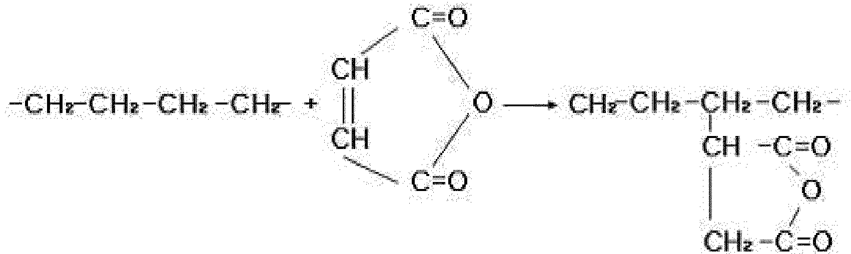

The aforementioned reaction mechanism employs a reactive extrusion method using a kneader and an extruder so as to provide the reactivity to the reaction derivative, in which the inserted polar monomer (methyl methacrylate (MMA) is generally used) is grafted and extruded to the carbon main chain.

In the copolymerization of the metal ion, the polar monomer may be simultaneously inserted by using peroxides, so that a bond mechanism within the reactor shown below may be induced at a high temperature and a high pressure.

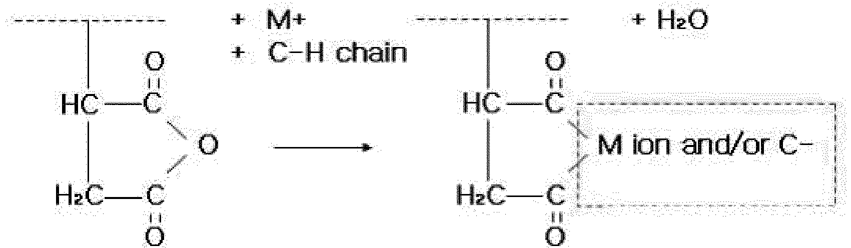

In a case of a polar base, interfacial free energy between the introduced bases is decreased so that strong bonding strength is exerted between the interfaces. In this case, a covalent bond, in which the strong metal ion having a damaged protection layer of the reaction retardant, which has been absorbed in a melting state within the reactor, is substituted between the metal surface and the polymer chain, is generated.

In this case, the hydrogen ion (H⁺), water (H₂O), various remaining monomers, and peroxides came from the main carbon chain need to be often removed.

When a time during which the reaction derivative remains becomes long at a high temperature and a high pressure, even though a matrix is based on the rubber having the high molecular weight, the matrix may turn into a gel or cause secondary polymeric carbonization, the control is continuously required in the subsequent processes.

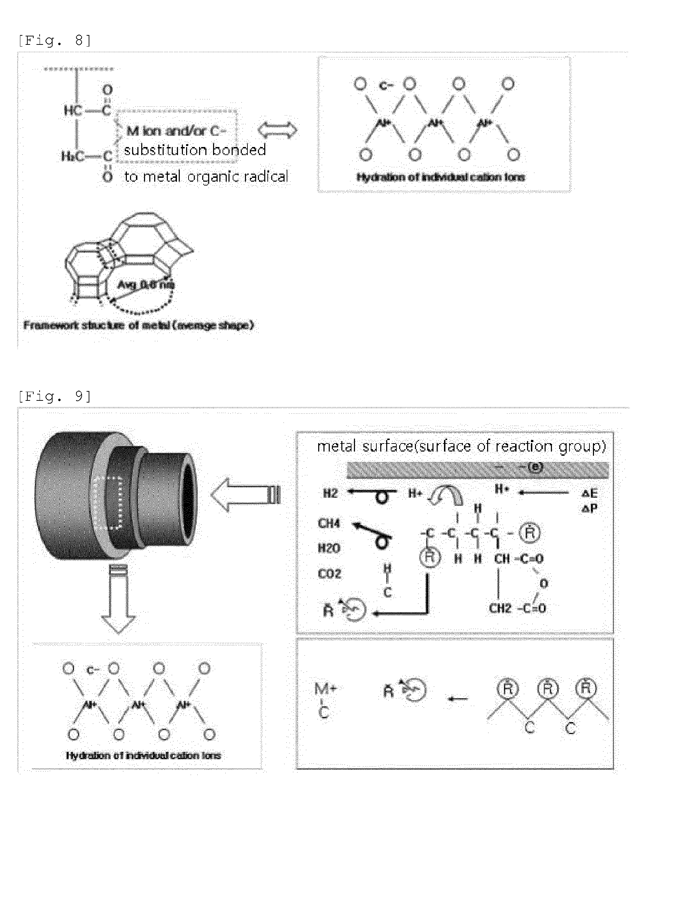

FIG. 8 is a diagram illustrating a mechanism of radical polymerization and metal ion copolymerization.

Referring to FIG. 8, it can be seen that the surface of the metal solid has an ordered crystal structure and a certain portion of each surface has voids of atomic bonds, which are capable of ion bonds.

Even the metal may create the strong bond which exchanges ions under a condition of a high temperature and a high pressure within the reactor in bond to the polymer ion (unsaturated polymer chain).

The materials in both sides are in a melt state at a high temperature, momentarily maintain the melt state when a high pressure is applied to the metal surface of the mold, and exist in an unstable state of activated ions, respectively.

FIG. 9 is a diagram illustrating a mechanism of hydrogen decomposition reaction and ion substitution reaction in a metal surface.

Referring to FIG. 9, when the hydrogen ion (H+) is separated from the main carbon chain of the carbon-based polymer (the hydro-cracking reaction) and the carbon ion (C-) that is the polymer chain is bonded to the place from which the hydrogen ion (H+) is separated, the unstable ion in the unsaturated state is absorbed and bonded. The bond in this case corresponds to the ion substitution bond, and the bond energy has general molecular bond energy.

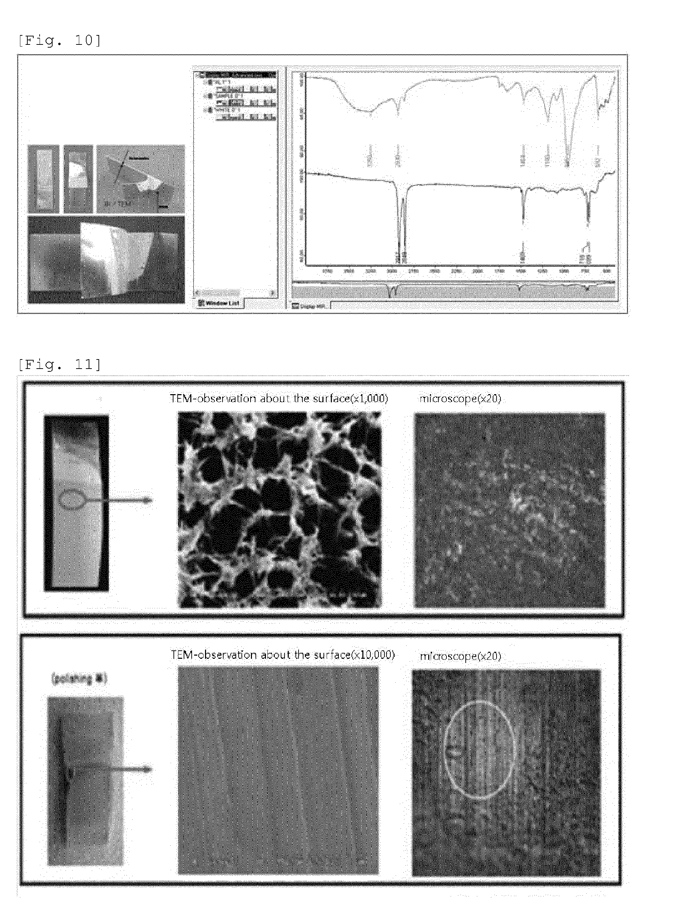

FIG. 10 is a Transmission Electron Microscopy (TEM) picture of a surface after a metal surface is substitution bonded to an organic ion, and FIG. 11 is a Scanning Electron Microscopy (SEM) picture of a surface after a metal surface is substitution bonded to an organic ion.

Referring to FIGs. 10 and 11, it can be seen that the substitution bond is performed between the metal and the organic polymer at the same positions, and aluminum used in an experiment is pure aluminum and the same types of ions are changed in their positions and bonded after the substitution of the two materials.

Next, an embodiment of a process of modifying the reaction derivative will be described.

Maleic anhydride is commercially dispersed in polystyrene-based rubber and Methyl methacrylate Butadien Rubber (MBR), to prepare the reaction derivative. In this process, the reaction derivative may be partially grafted, but the reaction derivative is coated with silicon-based oil so as to prevent a loss of the property during the maintenance of the contact with the metal surface.

Since the olefin-based carbon chain contacting the metal surface is non-polar series, the polar medium is introduced by grafting the maleic anhydride such that the polarity is maintained before the cross-linking.

The secondarily master batched material with a common unsaturated group (ion) on its contact surface is mixed with a metal salt common to a metal to be contacted, and then is polymerized in the form of a resin to form a thin layer.

Then, the grafted resin simultaneously has the reaction group in the unsaturated state of which the reactive is alive in the form of the commercial dispersion while maintaining the main chain.

As described above, the present invention is characterized in providing a high-temperature and high pressure environment by including the first substitution bond reactor in order to induce the ion substitution bond between the first polymer layer having very low reactivity and the metal layer.

Further, in this case, the reaction derivative for inducing the ion substation bond between the polymer layer and the metal layer is coated with silicon, master batched, and then confined so as to prevent the reaction derivative from being decomposed and hardened during the process of the extrusion. The protection barrier of the reaction derivative is damaged within the first substitution bond reactor, thereby inducing the ion substitution bond between the first polymer layer and the metal layer.

Although a technical spirit of the present invention has been described with reference to the accompanying drawings, an exemplary embodiment of the present invention has been described for illustrative purposes, but does not limit the present invention. Further, those skilled in the art will appreciate that various modifications, additions and substitutions are possible, without departing from the scope and spirit of the invention as disclosed in the accompanying claims.

## Claims

1. A composite pipe with improved bonding strength between heterogeneous materials, the composite pipe being formed of the heterogeneous materials including a polymer resin and a metal, the composite pipe comprising:
a first polymer layer formed in an innermost side of the composite pipe;
a metal layer formed on an external surface of the first polymer layer; and
a second polymer layer formed on an external surface of the metal layer,
wherein a connection between the first polymer layer and the metal layer and a connection between the metal layer and the second polymer layer are formed by ion substitution bond, and the first polymer layer is formed of at least one selected from a fluorine resin, polytetrafluoroethylene, a polyamide resin, polyamide 6, polyamide 66, polyamide 12, high-density polyethylene, medium-density polyethylene, a cross-linked olefin resin, poly phenylene sulfide (PPS), poly butylenes terephthalate (PBT), and grafting copolymer of the fluorine resin and the polyamide resin.

2. The composite pipe of claim 1, wherein the metal layer is formed of at least one metal selected from iron (Fe), aluminum (Al), copper (Cu), titanium (Ti), magnesium (Mg), or an alloy thereof.

3. The composite pipe of claim 1, wherein the second polymer layer uses a grafting compound of a magnesium hydroxide (MgOH₂) or an aluminum hydroxide (AlOH₃) and polyethylene.

4. An apparatus for manufacturing a composite pipe with improved bonding strength between heterogeneous materials, the apparatus comprising:
a first polymer resin extruder for extruding a first polymer resin so as to form a first polymer layer;
a first reaction derivative extruder for extruding a reaction derivative on a surface of the first polymer layer;
a first substitution bond reactor for inducing substitution bond between a surface of a metal and the first polymer layer containing an unsaturated group to bond the reaction derivative to an outside of the first polymer layer;
a metal-plate layer supply device for forming a metal layer by supplying a metal-plate layer to the outside of the first polymer layer to which the reaction derivative is bonded;
a metal layer forming device for forming a metal layer in the outside of the first polymer layer;
a high frequency heater for heating the metal layer by using a high frequency;
a second reaction derivative extruder for extruding the reaction derivative on a surface of the metal layer;
a second polymer resin extruder for extruding a second polymer resin so as to form a second polymer layer; and
a second substitution bond reactor in which the substitution bond is formed between the surface of the metal layer and the second polymer layer by the reaction derivative extruded on the surface of the metal layer.

5. The apparatus of claim 4, wherein the first substitution bond reactor and the second substitution bond reactor are operated at a temperature of 250°C or higher and a pressure of 5 to 30 kg/cm² and the high frequency heater preheats the surface of the metal layer to have a temperature in range of 500°C to 700°C.

6. The apparatus of claim 4, further comprising:
a first cooling device for cooling and hardening the reaction derivative extruded on the surface of the first polymer layer;
a second cooling device for cooling the composite pipe if which the second polymer layer is completely formed;
a cutting device for cutting the composite pipe; and
a winder for winding the composite pipe.

7. The apparatus of claim 4, wherein the first reaction derivative extruder is connected to the first substitution bond reactor while maintaining an angle of 40° to 60° with respect to the first polymer resin extruder, and the second reaction derivative extruder is connected to the second substitution bond reactor while maintaining an angle of 40° to 60° with respect to the second polymer resin extruder.

8. The apparatus of claim 4, wherein the first substitution bond reactor comprises:
a reaction part in which a substitution bond reaction progresses; and
a body part for supporting the reaction part, wherein the reaction part and the body part are separable such that the reaction part and the body part can be individually changed.

9. A method of manufacturing a composite pipe with improved bonding strength between heterogeneous materials, the method comprising:
forming a first polymer layer by extruding a first polymer resin through a first polymer resin extruder;
extruding a first reaction derivative for extruding a reaction derivative on a surface of the first polymer layer;
forming a metal layer by supplying a metal-plate layer to the surface of the first polymer layer on which the reaction derivative is extruded;
extruding a second reaction derivative for extruding the reaction derivative on a surface of the metal layer; and
forming a second polymer layer by extruding a second polymer resin on an outside surface of the metal layer on which the reaction derivative is extruded through a second polymer resin extruder

10. The method of claim 9, further comprising high frequency heating the surface of the metal layer to have a temperature in range of 500°C to 700°C through a high frequency after the forming of the metal layer.

11. The method of claim 9, further comprising preparing the reaction derivative before the extruding of the first reaction derivative, wherein the reaction derivative is prepared by particle dispersing a strong acid-based polar medium having strong reactivity in a rubber-based resin.

12. The method of claim 11, wherein the preparing of the reaction derivative comprises:
coating an outside of the reaction derivative with silicon; and
master batching the coated reaction derivative by processing the coated reaction derivative in a form of particle dispersion.

13. The method of claim 11, wherein the polar medium includes at least one selected from Meth-Acrylate (MA), Vinyl Acetate (VA), Maleic Anhydride (MA), and Methylmethacrylate (MMA).

14. The method of claim 11, wherein the rubber-based resin is methyl Methacrylate Butadien Rubber (MBR).
